# EUROPEAN PATENT APPLICATION

(11) **EP 4 664 440 A1**
(43) Date of publication of application: **17.12.2025**
(21) Application number: 24884311.2
(22) Date of filing: 24.09.2024
(51) Int. Cl.: G09F 9/30

(54) **FLEXIBLE COVER PLATE, FLEXIBLE DISPLAY PANEL, AND FOLDABLE DISPLAY DEVICE**

(30) Priority: 31.10.2023 CN 202311434398
(71) Applicant: Boe Technology Group Co., Ltd., Beijing 100015 (CN)
(72) Inventor: YANG, Xuekai, Beijing 100176 (CN); HUANG, Ruiwen, Beijing 100176 (CN); HAN, Ziang, Beijing 100176 (CN); ZHANG, Xiongnan, Beijing 100176 (CN); TSAI, Paoming, Beijing 100176 (CN); ZHANG, Song, Beijing 100176 (CN)
(74) Representative: Potter Clarkson
(86) International application number: PCT/CN2024/120705
(87) International publication number: WO 2025/092304

(57) **Abstract**

A flexible cover plate (10), a flexible display panel, and a foldable display device. The flexible cover plate (10) has a bending area (ZW) and a non-bending area (FZW) arranged in a first direction (X). The flexible cover plate (10) comprises an unequal-thickness ultrathin glass layer (1), a flexible layer (2) and a reinforcing layer (3). A recessed structure (11) is provided on the unequal-thickness ultrathin glass layer (1), and at least part of the recessed structure (11) is located in the bending area (ZW). The flexible layer (2) is at least arranged in the recessed structure (11). The reinforcing layer (3) is at least arranged in the recessed structure (11), the modulus of the reinforcing layer (3) is greater than the modulus of the flexible layer (2), and the modulus of the reinforcing layer (3) is less than the modulus of the unequal-thickness ultrathin glass layer (1). The flexible cover plate (10) can easily bend in the bending area (ZW), and has strong impact resistance and a superior performance in spherical object drop tests.

## Description

### CROSS-REFERENCE

The present disclosure claims priority to Chinese patent application No. 202311434398.5, filed on October 31, 2023 and entitled "FLEXIBLE COVER, FLEXIBLE DISPLAY PANEL AND FOLDABLE DISPLAY DEVICE", the entire contents of which are incorporated herein by reference in its entirety.

### TECHNICAL FIELD

The present disclosure relates to the display technical field, and in particular, to a flexible cover, a flexible display panel including the flexible cover, and a foldable display device including the flexible display panel.

### BACKGROUND

In order to ensure the bending performance of a foldable display device, a cover of the foldable display device adopts a material with a relatively low modulus, which reduces the protective effect of the cover on a display substrate. However, if the cover of the foldable display device adopts a material with a relatively high modulus, the stress of the cover after being bent is relatively large, this affects the display effect and the service life of the display substrate, and creases are prone to occur. Therefore, the flexibility and hardness of the cover of the current foldable display device cannot be balanced.

It should be noted that the information disclosed in the above background section is only used to enhance the understanding of the background of the present disclosure, and therefore may include information that does not constitute prior art known to those of ordinary skill in this art.

### SUMMARY

An objective of the present disclosure is to provide a flexible cover, a flexible display panel including the flexible cover and a foldable display device including the flexible display panel to overcome the above-mentioned deficiency in related art.

According to an aspect of the present disclosure, there is provided a flexible cover. The flexible cover has a bend region and a non-bend region arranged along a first direction. The flexible cover includes:
an ultra-thin glass layer of an unequal thickness, wherein a recess structure is provided in the ultra-thin glass layer of the unequal thickness, and at least a part of the recess structure is located in the bend region;
a flexible layer at least arranged in the recess structure; and
a reinforcing layer at least arranged in the recess structure, wherein a modulus of the reinforcing layer is greater than a modulus of the flexible layer, and the modulus of the reinforcing layer is smaller than a modulus of the ultra-thin glass layer of the unequal thickness.

In an example embodiment of the present disclosure, the reinforcing layer is provided with a groove, the groove extends along a second direction, and the second direction is perpendicular to the first direction.

In an example embodiment of the present disclosure, the groove is arranged at a side of the reinforcing layer close to a bottom wall of the recess structure, or the groove is arranged at a side of the reinforcing layer away from the bottom wall of the recess structure.

In an example embodiment of the present disclosure, a depth of the groove is smaller than or equal to 50% of a thickness of the reinforcing layer.

In an example embodiment of the present disclosure, a groove arranged at a side of the reinforcing layer close to a bottom wall of the recess structure is a first groove, and a groove arranged at a side of the reinforcing layer away from the bottom wall of the recess structure is a second groove, and the first groove and the second groove are staggered, or the first groove and the second groove are opposite to each other.

In an example embodiment of the present disclosure, a sum of a depth of the first groove and a depth of the second groove is smaller than or equal to 50% of a thickness of the reinforcing layer.

In an example embodiment of the present disclosure, a ratio of an absolute value of a difference between a refractive index of the flexible layer and a refractive index of the ultra-thin glass layer of the unequal thickness to the refractive index of the ultra-thin glass layer of the unequal thickness is smaller than or equal to 0.5%, and a ratio of an absolute value of a difference between a refractive index of the reinforcing layer and the refractive index of the ultra-thin glass layer of the unequal thickness to the refractive index of the ultra-thin glass layer of the unequal thickness is smaller than or equal to 0.5%.

In an example embodiment of the present disclosure, a ratio of an absolute value of a difference between a refractive index of the flexible layer and a refractive index of the ultra-thin glass layer of the unequal thickness to the refractive index of the ultra-thin glass layer of the unequal thickness is smaller than or equal to 0.3%, and a ratio of an absolute value of a difference between a refractive index of the reinforcing layer and the refractive index of the ultra-thin glass layer of the unequal thickness to the refractive index of the ultra-thin glass layer of the unequal thickness is smaller than or equal to 0.3%.

In an example embodiment of the present disclosure, the modulus of the reinforcing layer is greater than or equal to 0.1 GPa and smaller than or equal to 6 GPa, and the modulus of the flexible layer is greater than or equal to 0.01 GPa and smaller than or equal to 1 GPa.

In an example embodiment of the present disclosure, a ratio of a total thickness of the reinforcing layer to a depth of the recess structure is greater than or equal to 0.2 and smaller than or equal to 0.7.

In an example embodiment of the present disclosure, a ratio of a total thickness of the reinforcing layer to a depth of the recess structure is greater than or equal to 0.3 and smaller than or equal to 0.5.

In an example embodiment of the present disclosure, in the second direction, a ratio of a length of the reinforcing layer to a length of the recess structure is greater than or equal to 0.75 and smaller than or equal to 1; in the first direction, a ratio of a width of the reinforcing layer to a width of the recess structure is greater than or equal to 0.75 and smaller than or equal to 1, and the first direction intersects the second direction.

In an example embodiment of the present disclosure, the reinforcing layer includes a first part, a second part and a third part sequentially connected along the first direction, a thickness of the first part is greater than a thickness of the second part, and a thickness of the third part is greater than the thickness of the second part.

In an example embodiment of the present disclosure, in the first direction, a width of the first part is smaller than or equal to 50% of a width of the second part, and a width of the third part is smaller than or equal to 50% of the width of the second part.

In an example embodiment of the present disclosure, the recess structure includes a first side wall, a first transition surface, a bottom wall, a second transition surface and a second side wall connected sequentially; the bottom wall is connected with the first transition surface to form a first connection portion, and the first connection portion is arranged opposite to the first part; and the bottom wall is connected with the second transition surface to form a second connection portion, and the second connection portion is arranged opposite to the third part.

In an example embodiment of the present disclosure, the ultra-thin glass layer of the unequal thickness has two surfaces arranged opposite to each other; and the two surfaces are both provided with the recess structure, and recess structures in the two surfaces are arranged opposite to each other, or the recess structure is only provided in one of the surfaces.

In an example embodiment of the present disclosure, the flexible layer and the reinforcing layer are arranged in the recess structures in the two surfaces; or
wherein the two surfaces of the ultra-thin glass layer of the unequal thickness arranged opposite to each other are a first surface and a second surface, a recess structure arranged in the first surface is a first recess structure, and a recess structure arranged in the second surface is a second recess structure, only the flexible layer is arranged in the first recess structure, and the flexible layer and the reinforcing layer are arranged in the second recess structure.

In an example embodiment of the present disclosure, in one of the recess structures, the flexible layer is provided as at least two layers, the reinforcing layer is provided as at least one layer, and the reinforcing layer and the flexible layer are alternately provided.

In an example embodiment of the present disclosure, an outermost flexible layer extends outside the recess structure.

In an example embodiment of the present disclosure, in one of the recess structures, the reinforcing layer is provided as two layers, the flexible layer is provided as one layer, and at least one reinforcing layer is located at a side of the flexible layer away from the ultra-thin glass layer of the unequal thickness.

In an example embodiment of the present disclosure, in one of the recess structures, the flexible layer is provided as one layer, the reinforcing layer is provided as one layer, and the reinforcing layer is located at a side of the flexible layer away from the ultra-thin glass layer of the unequal thickness.

According to another aspect of the present disclosure, there is provided a flexible display panel, including:
a display substrate; and
a flexible cover which is the flexible cover according to any one of the above embodiments, wherein the flexible cover is arranged at a light exit side of the display substrate.

According to a further aspect of the present disclosure, there is provided a foldable display device, including the above flexible display panel.

It is to be understood that the foregoing general description and the following detailed description are illustrative and explanatory only and are not restrictive of the present disclosure.

### BRIEF DESCRIPTION OF THE DRAWINGS

The accompanying drawings herein, which are incorporated into the description and constitute a part of the description, illustrate embodiments consistent with the present disclosure, and are used to explain the principles of the present disclosure together with the description. Obviously, the accompanying drawings described below are only some embodiments of the present disclosure, and for those of ordinary skill in this art, other accompanying drawings can be obtained based on these accompanying drawings without creative work.
FIG. 1 is a schematic structural diagram of a flexible cover according to an example implementation of the present disclosure.
FIG. 2 is a schematic cross-sectional view of an ultra-thin glass layer of an unequal thickness in the flexible cover in FIG. 1 according to a first example implementation.
FIG. 3 is a schematic cross-sectional view of the ultra-thin glass layer of the unequal thickness in the flexible cover in FIG. 1 according to a second example implementation.
FIG. 4 is a partial enlarged schematic diagram of a part indicated by I in FIG. 3.
FIG. 5 is a schematic structural diagram of a reinforcing layer in FIG. 3.
FIG. 6 is a schematic structural diagram of a reinforcing layer according to a second example implementation.
FIG. 7 is a schematic structural diagram of a reinforcing layer according to a third example implementation.
FIG. 8 is a schematic structural diagram of the ultra-thin glass layer of the unequal thickness in the flexible cover in FIG. 1 according to a third example implementation.
FIG. 9 is a schematic structural diagram of a reinforcing layer in FIG. 8.
FIG. 10 is a schematic structural diagram of a reinforcing layer according to a fifth example implementation.
FIG. 11 is a schematic structural diagram of a reinforcing layer according to a sixth example implementation.
FIG. 12 is a schematic structural diagram of a reinforcing layer according to a seventh example implementation.
FIG. 13 is a schematic structural diagram of a top view of the reinforcing layer in FIGs. 9 to 12.
FIG. 14 is a schematic structural diagram of the ultra-thin glass layer of the unequal thickness in the flexible cover in FIG. 1 according to a fourth example implementation.
FIG. 15 is a schematic structural diagram of the ultra-thin glass layer of the unequal thickness in the flexible cover in FIG. 1 according to a fifth example implementation.
FIG. 16 is a schematic structural diagram of the ultra-thin glass layer of the unequal thickness in the flexible cover in FIG. 1 according to a sixth example implementation.
FIG. 17 is a schematic structural diagram of the ultra-thin glass layer of the unequal thickness in the flexible cover in FIG. 1 according to a seventh example implementation.
FIG. 18 is a schematic structural diagram of the ultra-thin glass layer of the unequal thickness in the flexible cover in FIG. 1 according to an eighth example implementation.
FIG. 19 is a schematic structural diagram of the ultra-thin glass layer of the unequal thickness in the flexible cover in FIG. 1 according to a ninth example implementation.
FIG. 20 is a schematic structural diagram of a flexible display panel according to an example implementation of the present disclosure.

Description of reference numerals:
1: ultra-thin glass layer of an unequal thickness; 1a: first surface; 1b: second surface; 11: recess structure; 11a: first recess structure; 11b: second recess structure; 111: first side wall; 112: first transition surface; 112-3: first connection portion; 113: bottom wall; 113-4: second connection portion; 114: second transition surface; 115: second side wall;
2: flexible layer;
3: reinforcing layer; 31: first part; 32: second part; 33: third part; 34: groove; 34a: first groove; 34a1: first groove side wall; 34b: second groove; 34b1: second groove side wall;
10: flexible cover;
20: display substrate; 201: base substrate; 202: driving backplane; 203: light emitting device; 30: touch control substrate;
X: first direction; Y: second direction; Z: thickness direction; ZW: bend region; FZW: non-bend region.

### DETAILED DESCRIPTION

Example implementations will now be described more fully with reference to the accompanying drawings. However, the example implementations can be implemented in a variety of forms and should not be construed as limited to the implementations set forth herein; rather, these implementations are provided so that the present disclosure will be comprehensive and complete and fully convey the concepts of the example implementations to those skilled in the art. The same reference numerals in the figures represent the same or similar structures, and thus their detailed description will be omitted. **In** addition, the drawings are only schematic illustrations of the present disclosure and are not necessarily drawn to scale.

Although relative terms such as "upper" and "lower" are used in this description to describe a relative relationship of a component shown in a drawing to another component, these terms are used in this description only for convenience, for example, the terms are based on direction(s) of examples described in the drawings. It can be understood that if a device in a drawing is turned upside down, a component described as an "upper" component will become a "lower" component. When a structure is "on" another structure, it may mean that the structure is formed integrally on another structure, or that the structure is "directly" disposed on another structure, or that the structure is "indirectly" disposed on another structure through other structure(s).

The terms "one", "a/an", "the", "said" and "at least one" are used to indicate the presence of one or more elements/components/etc. The terms "comprising/including" and "having" are used to express an open-ended inclusive meaning and mean that additional elements/components/etc. may exist in addition to the listed elements/components/etc. The terms "first", "second" and "third" etc. are used merely as markers and are not intended to limit the quantity of associated objects.

In this application, unless otherwise clearly specified and limited, the term "connection" should be understood in a broad sense. For example, "connection" may be a fixed connection, a detachable connection, or an integral connection; "connection" may be a direct connection or an indirect connection through an intermediate medium. The expression "and/or" is just a description of an association relationship of associated objects, indicating that there may be three relationships. For example, A and/or B may mean: A exists alone, A and B exist at the same time, and B exists alone. In addition, the character "/" herein generally indicates that associated objects before and after the character are in an "or" relationship.

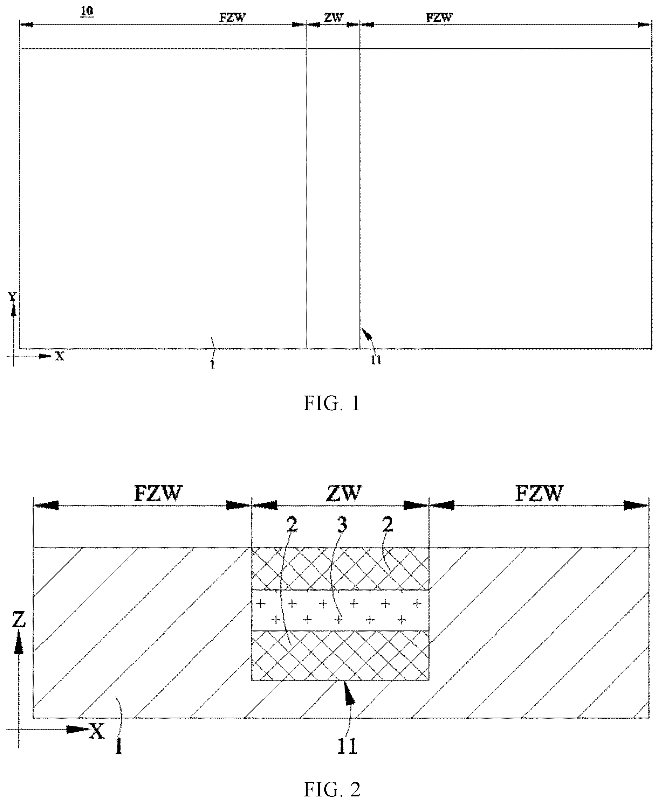

An example implementation of the present disclosure provides a flexible cover 10. As shown in FIG. 1 to FIG. 19, the flexible cover 10 has a bend region ZW and a non-bend region FZW arranged along a first direction X. The flexible cover 10 may include an ultra-thin glass layer 1 of an unequal thickness, a flexible layer 2 and a reinforcing layer 3. A recess structure 11 is provided in the ultra-thin glass layer 1 of the unequal thickness, and at least a part of the recess structure 11 is located in the bend region ZW. The flexible layer 2 is at least provided in the recess structure 11. The reinforcing layer 3 is at least provided in the recess structure 11. A modulus of the reinforcing layer 3 is greater than a modulus of the flexible layer 2, and the modulus of the reinforcing layer 3 is smaller than a modulus of the ultra-thin glass layer 1 of the unequal thickness.

In the flexible cover 10 of the present disclosure, on the one hand, the hardness of the ultra-thin glass layer 1 of the unequal thickness in the bend region ZW is reduced by setting the recess structure 11 in the ultra-thin glass layer 1 of the unequal thickness in the bend region ZW, so that the ultra-thin glass layer 1 of the unequal thickness can be easily bent in the bend region ZW. On the other hand, the modulus of the reinforcing layer 3 is greater than the modulus of the flexible layer 2, so that the reinforcing layer 3 can improve the impact resistance (for example, impact resistance against pen drop and ball drop) performance of the ultra-thin glass layer 1 of the unequal thickness in the bend region ZW, and the flexibility of the reinforcing layer 3 is better than the flexibility of the ultra-thin glass layer 1 of the unequal thickness, which is beneficial to the bending of the flexible cover 10; and the flexible layer 2 can ensure the bending performance of the ultra-thin glass layer 1 of the unequal thickness in the bend region ZW.

The flexible cover 10 can be bent, and therefore, the flexible cover 10 has a bend region ZW, and the flexible cover 10 is bent in the bend region ZW. Specifically, as shown in FIG. 1, the flexible cover 10 may include two non-bend regions FZW and one bend region ZW, the two non-bend regions FZW and one bend region ZW are arranged along the first direction X, and the bend region ZW is connected between the two non-bend regions FZW. Of course, in some other example implementations of the present disclosure, the non-bend regions FZW and the bend region(s) ZW can be set to more as needed, which are not described one by one here.

The flexible cover 10 may be set to a single-layer structure, in which case the flexible cover 10 may include an inorganic material layer. The flexible cover 10 may also be set to a multi-layer structure, in which case the flexible cover 10 may include at least one inorganic material layer and at least one organic material layer, or at least two inorganic material layers. The inorganic material layer may be Ultra Thin Glass (UTG), ultra-thin glass of an unequal thickness (Ultra Flexible Glass, UFG), etc. The organic material may be one or more of polyimide (PI), terephthalic acid-based polymers, polyethylene naphthalate (PEN), polycarbonate (PC), polymethyl methacrylate (PMMA), etc.

In an example implementation, the flexible cover 10 may include one layer of the ultra-thin glass layer 1 of the unequal thickness. The thickness of the ultra-thin glass layer 1 of the unequal thickness is greater than 30 µm and smaller than or equal to 500 µm. For example, the thickness of the ultra-thin glass layer 1 of the unequal thickness may be 50 µm, 80 µm, 100 µm, 120 µm, 150 µm, 170 µm, 200 µm, 230 µm, 250 µm, 280 µm, 300 µm, 320 µm, 350 µm, 370 µm, 400 µm, 430 µm, 450 µm, 480 µm, etc. The ultra-thin glass layer 1 of the unequal thickness may be produced by conventional process(es) such as an overflow method, a down-draw method, or a casting method, etc.

As shown in FIG. 2, a recess structure 11 is provided in the ultra-thin glass layer 1 of the unequal thickness. For example, a part of the ultra-thin glass layer 1 of the unequal thickness may be etched by a thinning process such as photolithography to form the recess structure 11. The thickness of the ultra-thin glass layer 1 of the unequal thickness remaining at the recess structure 11 is greater than or equal to 30 µm and smaller than or equal to 470 µm. For example, the thickness of the ultra-thin glass layer 1 of the unequal thickness remaining at the recess structure 11 may be 50 µm, 80 µm, 100 µm, 120 µm, 150 µm, 170 µm, 200 µm, 230 µm, 250 µm, 280 µm, 300 µm, 320 µm, 350 µm, 370 µm, 400 µm, 430 µm, 450 µm, etc.

At least a part of the recess structure 11 is located in the bend region ZW. For example, the recess structure 11 may be entirely located in the bend region ZW, and the recess structure 11 may be slightly smaller than the bend region ZW. Alternatively, the recess structure 11 may be entirely located in the bend region ZW, and the recess structure 11 may basically occupy the bend region ZW. Alternatively, a part of the recess structure 11 may be located in the bend region ZW, and the other part of the recess structure 11 may be located in a non-bend region FZW.

As shown in FIG. 1, the recess structure 11 extends along a second direction Y, and the second direction Y is perpendicular to the first direction X, or, it can be said that the second direction Y is perpendicular to a bending direction of the flexible cover 10. The recess structure 11 may be a through groove that penetrates the ultra-thin glass layer 1 of the unequal thickness in the second direction Y, or the recess structure 11 may also be a blind groove that does not penetrate the ultra-thin glass layer 1 of the unequal thickness at one end or both ends.

As shown in FIG. 2, the recess structure 11 may be set as a rectangular groove, that is, a cross-sectional shape of the recess structure 11 perpendicular to the second direction Y may be a rectangle.

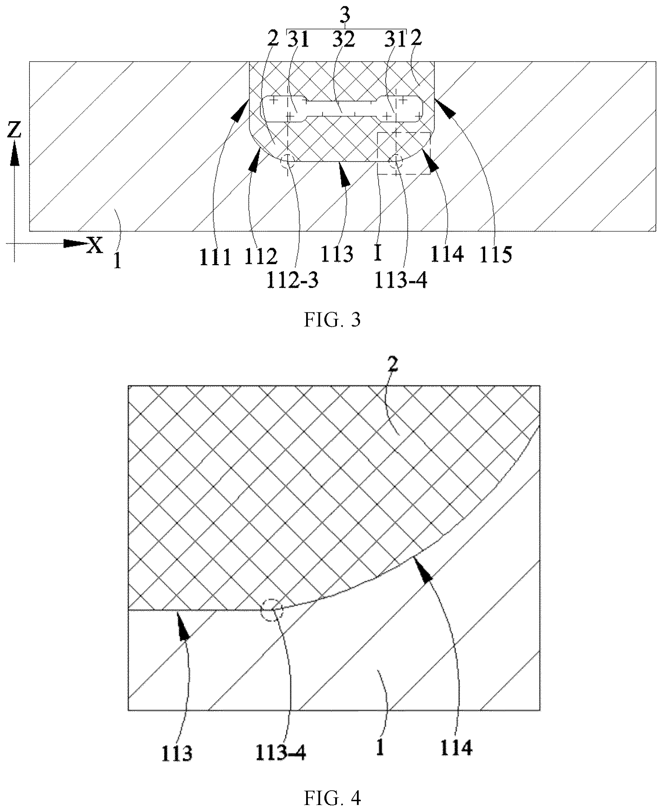

As shown in FIG. 3, the recess structure 11 may be set as a "U"-shaped groove, that is, the cross-sectional shape of the recess structure 11 perpendicular to the second direction Y may be a "U" shape. Specifically, the recess structure 11 may include a first side wall 111, a first transition surface 112, a bottom wall 113, a second transition surface 114, and a second side wall 115 which are connected sequentially. The first transition surface 112 and the second transition surface 114 may be set as arc surfaces, so that there is a smooth transition between the first side wall 111 and the bottom wall 113, and there is also a smooth transition between the bottom wall 113 and the second side wall 115. In addition, stress concentration at the corner caused by the formation of a right angle, an acute angle or an obtuse angle structure is avoided, so that the corner of the recess structure 11 is not easy to crack, thus ensuring the strength of the ultra-thin glass layer 1 of the unequal thickness. In addition, the first transition surface 112 and the second transition surface 114 may include a plane and arc surfaces connected to both sides of the plane. This structure can also enable a smooth transition between the first side wall 111 and the bottom wall 113 and a smooth transition between the bottom wall 113 and the second side wall 115, thus ensuring the strength of the ultra-thin glass layer 1 of the unequal thickness.

In addition, in some other example implementations of the present disclosure, sidewall(s) of the recess structure 11 may be set to be stepped. That is, the first sidewall 111 and the second sidewall 115 may be set to be stepped surfaces, so that the recess structure 11 forms a structure with a gradually expanding opening. The stepped recess structure 11 may be formed by multiple thinning processes. A plurality of recess structures 11 may be provided and the recess structures may be spaced apart. The plurality of recess structures 11 are arranged in the bend region ZW along the second direction Y.

Of course, in some other example implementations of the present disclosure, the flexible cover 10 may include two or more ultra-thin glass layers 1 of the unequal thickness. In this case, a recess structure 11 is provided in at least one ultra-thin glass layer 1 of the unequal thickness. That is, the recess structure 11 may be provided in one ultra-thin glass layer 1 of the unequal thickness, or the recess structure 11 may be provided in two or more ultra-thin glass layers 1 of the unequal thickness. The specific structure of the recess structure 11 has been described in detail above, and thus repeated descriptions will be omitted here. By providing the recess structure 11 in the ultra-thin glass layer(s) 1 of the unequal thickness in the bend region ZW, the hardness of the ultra-thin glass layer(s) 1 of the unequal thickness in the bend region ZW is reduced, and thus the ultra-thin glass layer(s) 1 of the unequal thickness can be easily bent in the bend region ZW.

In an example implementation, a flexible layer 2 is provided at least in the recess structure 11, a reinforcing layer 3 is provided at least in the recess structure 11, and the modulus of the reinforcing layer 3 is greater than the modulus of the flexible layer 2, and the modulus of the reinforcing layer 3 is smaller than the modulus of the ultra-thin glass layer 1 of the unequal thickness. Thus, the reinforcing layer 3 can improve the impact resistance (for example, impact resistance against pen drop and ball drop) performance of the ultra-thin glass layer 1 of the unequal thickness in the bend region ZW, and the flexibility of the reinforcing layer 3 is better than the flexibility of the ultra-thin glass layer 1 of the unequal thickness, which is beneficial to the bending of the flexible cover 10; and the flexible layer 2 can ensure the bending performance of the ultra-thin glass layer 1 of the unequal thickness in the bend region ZW.

Specifically, the modulus of the reinforcing layer 3 is greater than or equal to 0.1 Gpa and smaller than or equal to 6 Gpa. For example, the modulus of the reinforcing layer 3 may be 0.3 Gpa, 0.5 Gpa, 0.8 Gpa, 1 Gpa, 1.2 Gpa, 1.5 Gpa, 1.7 Gpa, 2 Gpa, 2.3 Gpa, 2.5 Gpa, 2.8 Gpa, 3 Gpa, 3.2 Gpa, 3.5 Gpa, 3.7 Gpa, 4 Gpa, 4.3 Gpa, 4.5 Gpa, 4.8 Gpa, 5 Gpa, 5.2 Gpa, 5.5 Gpa, 5.7 Gpa, etc.

The modulus of the flexible layer 2 is greater than or equal to 0.01 Gpa and smaller than or equal to 1 Gpa. For example, the modulus of the flexible layer 2 may be 0.03 Gpa, 0.05 Gpa, 0.08 Gpa, 0.1 Gpa, 0.12 Gpa, 0.15 Gpa, 0.17 Gpa, 0.2 Gpa, 0.23 Gpa, 0.25 Gpa, 0.28 Gpa, 0.3 Gpa, 0.32 Gpa, 0.35 Gpa, 0.37 Gpa, 0.4 Gpa, 0.43 Gpa, 0.45Gpa, 0.48 Gpa, 0.5G pa, 0.52 Gpa, 0.55 Gpa, 0.57 Gpa, 0.6 Gpa, 0.63 Gpa, 0.65 Gpa, 0.68 Gpa, 0.7 Gpa, 0.72 Gpa, 0.75 Gpa, 0.77 Gpa, 0.8 Gpa, 0.83 Gpa, 0.85 Gpa, 0.88 Gpa, 0.9 Gpa, 0.92 Gpa, 0.95 Gpa, 0.97 Gpa, etc.

In an example implementation, a ratio of an absolute value of a difference between a refractive index λ2 of the flexible layer 2 and a refractive index λ1 of the ultra-thin glass layer 1 of the unequal thickness to the refractive index λ1 of the ultra-thin glass layer 1 of the unequal thickness is smaller than or equal to 0.5%, and the specific formula is |λ2-λ1|/λ1≤0.5%. That is, the refractive index of the flexible layer 2 may be larger than the refractive index of the ultra-thin glass layer 1 of the unequal thickness, or the refractive index of the flexible layer 2 may be smaller than the refractive index of the ultra-thin glass layer 1 of the unequal thickness. For example, the ratio of the absolute value of the difference between the refractive index λ2 of the flexible layer 2 and the refractive index λ1 of the ultra-thin glass layer 1 of the unequal thickness to the refractive index λ1 of the ultra-thin glass layer 1 of the unequal thickness may be 0.05 %, 0.1 %, 0.15%, 0.2 %, 0.25 %, 0.3 %, 0.35%, 0.4 %, 0.45%, etc.

A ratio of an absolute value of a difference between a refractive index λ3 of the reinforcing layer 3 and the refractive index λ1 of the ultra-thin glass layer 1 of the unequal thickness to the refractive index λ1 of the ultra-thin glass layer 1 of the unequal thickness is smaller than or equal to 0.5%, and the specific formula is |λ3-λ1|/λ1≤0.5%. That is, the refractive index of the reinforcing layer 3 may be larger than the refractive index of the ultra-thin glass layer 1 of the unequal thickness, or the refractive index of the reinforcing layer 3 may be smaller than the refractive index of the ultra-thin glass layer 1 of the unequal thickness. For example, the ratio of the absolute value of the difference between the refractive index λ3 of the reinforcing layer 3 and the refractive index λ1 of the ultra-thin glass layer 1 of the unequal thickness to the refractive index λ1 of the ultra-thin glass layer 1 of the unequal thickness may be 0.05 %, 0.1 %, 0.15 %, 0.2%, 0.25 %, 0.3%, 0.35%, 0.4 %, 0.45 %, etc.

By such arrangement, the difference between the refractive index of the flexible layer 2 and the refractive index of the ultra-thin glass layer 1 of the unequal thickness is relatively small, thereby avoiding occurrence of an outline of the flexible layer 2 due to the difference in refractive index between the edge of the flexible layer 2 and the ultra-thin glass layer 1 of the unequal thickness, so as to ensure the display effect. The difference between the refractive index of the reinforcing layer 3 and the refractive index of the ultra-thin glass layer 1 of the unequal thickness is also relatively small, and similarly, this arrangement can avoid occurrence of an outline of the reinforcing layer 3 due to the difference in refractive index between the edge of the reinforcing layer 3 and the ultra-thin glass layer 1 of the unequal thickness, thereby ensuring the display effect.

Optionally, the ratio of the absolute value of the difference between the refractive index λ2 of the flexible layer 2 and the refractive index λ1 of the ultra-thin glass layer 1 of the unequal thickness to the refractive index λ1 of the ultra-thin glass layer 1 of the unequal thickness is smaller than or equal to 0.3%, and the specific formula is |λ2-λ1|/λ1≤0.3%. The ratio of the absolute value of the difference between the refractive index λ3 of the reinforcing layer 3 and the refractive index λ1 of the ultra-thin glass layer 1 of the unequal thickness to the refractive index λ1 of the ultra-thin glass layer 1 of the unequal thickness is smaller than or equal to 0.3%, and the specific formula is |λ3-λ|/λ1≤0.3%.

With such arrangement, the difference between the refractive index of the flexible layer 2 and the refractive index of the ultra-thin glass layer 1 of the unequal thickness is further small, thereby avoiding occurrence of an outline of the flexible layer 2 due to the difference in refractive index between the edge of the flexible layer 2 and the ultra-thin glass layer 1 of the unequal thickness, so as to ensure the display effect. The difference between the refractive index of the reinforcing layer 3 and the refractive index of the ultra-thin glass layer 1 of the unequal thickness is further small, and similarly, this arrangement can avoid occurrence of an outline of the reinforcing layer 3 due to the difference in refractive index between the edge of the reinforcing layer 3 and the ultra-thin glass layer 1 of the unequal thickness, thereby ensuring the display effect.

The material of the flexible layer 2 may be an organic material or an inorganic material. The organic material may include polyimide (PI), terephthalic acid-based polymers, polyethylene naphthalate (PEN), polycarbonate (PC), polymethyl methacrylate (PMMA), polyurethane, polyaramid, acrylic, polyacrylate, polyvinylidene chloride, polyvinylidene fluoride (PVDF), polystyrene, ethylene vinyl alcohol copolymer, polyether sulfone (PES), polyetherimide (PEI), polyphenylene sulfide (PPS), poly(allyl ester), triacetate film (TAC), cellulose acetate propionate (CAP), etc. The inorganic material may include flexible glass.

The material of the reinforcing layer 3 may be an organic material or an inorganic material. The organic material may include polyimide (PI), terephthalic acid-based polymers, polyethylene naphthalate (PEN), polycarbonate (PC), polymethyl methacrylate (PMMA), polyurethane, polyaramid, acrylic, polyacrylate, polyvinylidene chloride, polyvinylidene fluoride (PVDF), polystyrene, ethylene vinyl alcohol copolymer, polyether sulfone (PES), polyetherimide (PEI), polyphenylene sulfide (PPS), poly(allyl ester), triacetate film (TAC), cellulose acetate propionate (CAP), etc. The inorganic material may include flexible glass.

The flexible layer 2 and the reinforcing layer 3 may be formed by coating or dispensing process, and the reinforcing layer 3 may be a finished film, which is fixed on the ultra-thin glass layer 1 of the unequal thickness by a laminating process. The above-mentioned process methods may be used on a flexible cover 10.

In an example implementation, a ratio of a total thickness of the reinforcing layer 3 to a depth of the recess structure 11 is greater than or equal to 0.2 and smaller than or equal to 0.7. For example, the ratio of the total thickness of the reinforcing layer 3 to the depth of the recess structure 11 may be 0.23, 0.25, 0.28, 0.3, 0.32, 0.35, 0.37, 0.4, 0.43, 0.45, 0.48, 0.5, 0.52, 0.55, 0.57, 0.6, 0.63, 0.65, 0.68, etc.

If the ratio of the total thickness of the reinforcing layer 3 to the depth of the recess structure 11 is too small, the total thickness of the reinforcing layer 3 is too small, and the reinforcement effect of the reinforcing layer 3 is not obvious. If the ratio of the total thickness of the reinforcing layer 3 to the depth of the recess structure 11 is too large, the total thickness of the reinforcing layer 3 is too large, and the strength is too large, which is not conducive to bending.

The above numerical range(s) not only ensures(ensure) the reinforcement effect of the reinforcing layer 3, but also ensures(ensure) the bending effect of the flexible cover 10 in the bend region ZW.

Optionally, the ratio of the total thickness of the reinforcing layer 3 to the depth of the recess structure 11 is greater than or equal to 0.3 and smaller than or equal to 0.5, so as to further ensure the reinforcement effect of the reinforcing layer 3 and the bending effect of the flexible cover 10 in the bend region ZW.

It should be noted that, when the reinforcing layer 3 is provided as one layer in the thickness direction Z of the unequal thickness ultra-thin glass layer 1, the total thickness of the reinforcing layer 3 of course refers to the thickness of the one reinforcing layer 3. When the reinforcing layer 3 is provided as two or more layers in the thickness direction Z of the unequal thickness ultra-thin glass layer 1, the total thickness of the reinforcing layer 3 of course refers to the thickness of two or more reinforcing layers 3. Moreover, in a case where the thickness of the reinforcing layer 3 is different at different locations, the ratio of the total thickness of the reinforcing layer 3 at different locations to the depth of the recess structure 11 may be different, as long as the ratio is within the above range.

As shown in FIG. 2, the reinforcing layer 3 may be set as a flat plate structure, that is, the thickness of the reinforcing layer 3 is substantially the same at all locations.

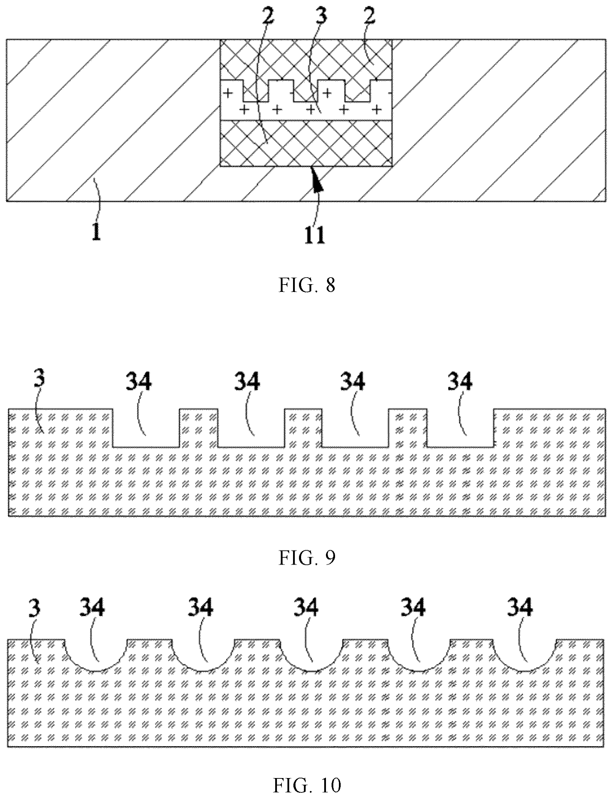

As shown in FIG. 8 to FIG. 13, a groove 34 is provided in the reinforcing layer 3, and the groove 34 extends along the second direction Y, and the second direction Y is perpendicular to the first direction X. That is, the extension direction of the groove 34 is perpendicular to the bending direction of the flexible cover 10. The groove 34 can increase the flexibility of the reinforcing layer 3, so that the reinforcing layer 3 is more conducive to bending, and the stress after bending is smaller. A side wall of the groove 34 can ensure the strength of the reinforcing layer 3, so that the reinforcing layer 3 has a better reinforcement effect.

The groove 34 may be provided at a side of the reinforcing layer 3. Referring to FIG. 8, the groove 34 may be arranged at a side of the reinforcing layer 3 away from the bottom wall 113 of the recess structure 11. Of course, in some other example implementations of the present disclosure, the groove 34 may also be arranged at a side of the reinforcing layer 3 close to the bottom wall 113 of the recess structure 11.

The depth of the groove 34 is smaller than or equal to 50% of the thickness of the reinforcing layer 3. For example, the depth of the groove 34 may be 5%, 10%, 15%, 20%, 25%, 30%, 35%, 40 %, 45% or the like of the thickness of the reinforcing layer 3.

If the depth of the groove 34 is too large, there will be a loss of the impact resistance performance of the reinforcing layer 3; therefore, the above numerical range(s) enables(enable) the reinforcing layer 3 to have both flexibility and impact resistance performance.

At least two grooves 34 may be provided. In the first direction X, a ratio of a total width of the grooves 34 to a width of the reinforcing layer 3 is greater than or equal to 0.2 and smaller than or equal to 0.7. For example, the ratio of the total width of the grooves 34 to the width of the reinforcing layer 3 may be 0.25, 0.3, 0.35, 0.4, 0.45, 0.5, 0.55, 0.6, 0.65, etc.

If the ratio of the total width of the grooves 34 to the width of the reinforcing layer 3 is too small, the grooves 34 have little effect on increasing the flexibility of the reinforcing layer 3; if the ratio of the total width of the grooves 34 to the width of the reinforcing layer 3 is too large, the strength of the reinforcing layer 3 cannot be guaranteed.

The above numerical range(s) not only ensures(ensure) that the flexibility of the reinforcing layer 3 can be increased through the grooves 34, making the reinforcing layer 3 more conducive to bending and having less stress after bending, but also ensures(ensure) the strength of the reinforcing layer 3, so that the reinforcing layer 3 has a better reinforcement effect.

As shown in FIG. 9, FIG. 11 and FIG. 12, the grooves 34 may be rectangular grooves, that is, the shapes of the cross sections of the grooves 34 perpendicular to the second direction Y may be rectangles. Referring to FIG. 10, the grooves 34 may be arc grooves, that is, the shapes of the cross sections of the grooves 34 perpendicular to the second direction Y may be semicircle, sub-semicircle, semi-elliptical, sub-semi-elliptical, etc. Of course, the grooves 34 may also be other shapes, which are not described here one by one.

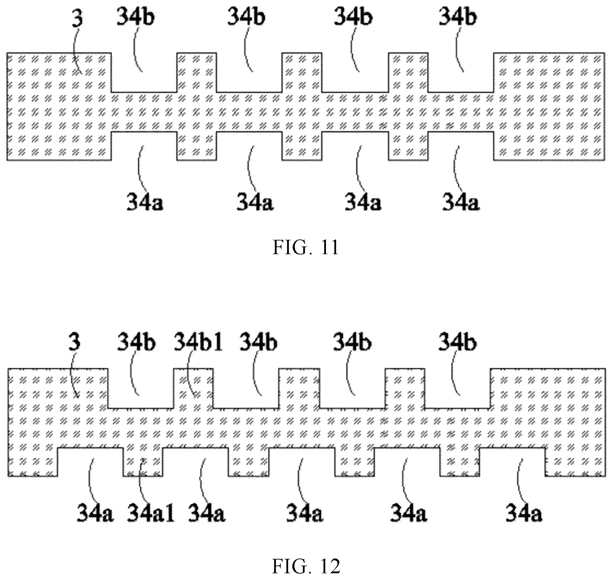

In addition, in some other example implementations of the present disclosure, as shown in FIG. 11 and FIG. 12, the groove(s) 34 may be arranged at both sides of the reinforcing layer 3. Specifically, a groove 34 arranged at a side of the reinforcing layer 3 close to the bottom wall 113 of the recess structure 11 is a first groove 34a, and a groove 34 arranged at a side of the reinforcing layer 3 away from the bottom wall 113 of the recess structure 11 is a second groove 34b. As shown in FIG. 12, the first groove(s) 34a and the second groove(s) 34b may be arranged in a staggered manner, that is, a first groove 34a and a second groove side wall 34b1 between two adjacent second grooves 34b are arranged directly opposite to each other, and a second groove 34b and a first groove side wall 34a1 between two adjacent first grooves 34a are arranged directly opposite to each other. In addition, depending on a difference between the width of the first groove(s) 34a and the width of the second groove(s) 34b and a difference between the width of the first groove side wall 34a1 and the width of the second groove side wall 34b1, a first groove 34a may be arranged opposite to a part of second grooves 34b.

As shown in FIG. 11, the first groove(s) 34a and the second groove(s) 34b may be arranged opposite to each other. For example, the first groove(s) 34a and the second groove(s) 34b may be arranged directly opposite to each other. Of course, "directly opposite to each other" does not only mean being completely opposite to each other, but also there may be a certain error. The error range varies according to the process and equipment. As long as the error is within the error range, it is considered to be opposite arrangement.

In this case, the sum of the depth of a first groove 34a and the depth of a second groove 34b is smaller than or equal to 50% of the thickness of the reinforcing layer 3. For example, the sum of the depth of the first groove 34a and the depth of the second groove 34b may be 5%, 10%, 15%, 20%, 25%, 30%, 35%, 40%, 45%, etc. of the thickness of the reinforcing layer 3.

If the sum of the depth of the first groove 34a and the depth of the second groove 34b is too large, there will be a loss of the impact resistance performance of the reinforcing layer 3; therefore, the above numerical range(s) enables(enable) the reinforcing layer 3 to have both flexibility and impact resistance performance.

In an example implementation, in the second direction Y, a ratio of a length of the reinforcing layer 3 to the length of the recess structure 11 is greater than or equal to 0.75 and smaller than or equal to 1. For example, the ratio of the length of the reinforcing layer 3 to the length of the recess structure 11 may be 0.78, 0.8, 0.82, 0.85, 0.87, 0.9, 0.93, 0.95, 0.98, etc.

Moreover, in the first direction X, a ratio of the width of the reinforcing layer 3 to the width of the recess structure 11 is greater than or equal to 0.75 and smaller than or equal to 1. For example, the ratio of the width of the reinforcing layer 3 to the width of the recess structure 11 may be 0.78, 0.8, 0.82, 0.85, 0.87, 0.9, 0.93, 0.95, 0.98, etc. The first direction X intersects the second direction Y. For example, the first direction X may be perpendicular to the second direction Y.

The size of the length and width of the reinforcing layer 3 may be the same as the size of the length and width of the recess structure 11, or may be slightly smaller than the size of the length and width of the recess structure 11.

If the ratio of the length of the reinforcing layer 3 to the length of the recess structure 11 and the ratio of the width of the reinforcing layer 3 to the width of the recess structure 11 are too small, it is not conducive to the full area protection of the reinforcing layer 3. The above numerical range(s) enables(enable) the reinforcing layer 3 to achieve full protection.

In addition, according to the machining precision in an actual process, the size of the reinforcing layer 3 and the recess structure 11 is allowed to have a tolerance of ± 500 µm.

As shown in FIG. 3, in a case where the size of the length and width of the reinforcing layer 3 is slightly smaller than that of the recess structure 11, the flexible layer 2 fills the gap between the reinforcing layer 3 and the sidewall(s) of the recess structure 11, that is, the flexible layer 2 wraps the reinforcing layer 3.

In some example implementations of the present disclosure, referring to FIG. 3 and FIG. 5 to FIG. 7, the reinforcing layer 3 may include a first part 31, a second part 32, and a third part 33 sequentially connected along the first direction X. In the thickness direction Z, the thickness of the first part 31 is greater than the thickness of the second part 32, and the thickness of the third part 33 is greater than the thickness of the second part 32. That is, in the first direction X, the thickness of the middle part of the reinforcing layer 3 is smaller than the thicknesses of the two end parts. The thickness of the first part 31 and the thickness of the third part 33 may be the same or different.

Since the radius of curvature of the second part 32 of the reinforcing layer 3 after bending is relatively small and the stress is relatively large, setting the thickness of the second part 32 of the reinforcing layer 3 to be thinner can reduce the stress after bending; and setting the thicknesses of the first part 31 and the third part 33 of the reinforcing layer 3 to be thicker can ensure the strength and impact resistance performance of the reinforcing layer 3.

In the first direction X, the width of the first part 31 is smaller than or equal to 50% of the width of the second part 32. For example, the width of the first part 31 may be 5%, 10%, 15%, 20%, 25%, 30%, 35%, 40%, 45%, etc. of the width of the second part 32. The width of the third part 33 is smaller than or equal to 50% of the width of the second part 32. For example, the width of the third part 33 may be 5%, 10%, 15%, 20%, 25%, 30%, 35%, 40%, 45%, etc. of the width of the second part 32.

If the width of the first part 31 and the width of the third part 33 are set too large to make the width of the second part 32 too narrow, the stress of the second part 32 will be too concentrated after the reinforcing layer 3 is bent, resulting in the loss of the bending performance of the reinforcing layer 3, which may easily cause cracks or breakage in the second part 32.

Referring to FIG. 3 and FIG. 4, the approximate positions of a first connection portion 112-3 and a second connection portion 113-4 are indicated by circular dotted lines in the drawings, and a relative relationship between the first connection portion 112-3 and the first part 31 and a relative relationship between the second connection portion 113-4 and the third part 33 are indicated by straight dotted lines in the drawings. The bottom wall 113 is connected to the first transition surface 112 to form the first connection portion 112-3. The first connection portion 112-3 may include a part of the bottom wall 113 close to the first transition surface 112 and a part of the first transition surface 112 close to the bottom wall 113. After the flexible cover 10 is bent, the stress at the first connection portion 112-3 is relatively concentrated, and the thickness at the first connection portion 112-3 is relatively small, and thus cracks or even breakages are easily generated at the first connection portion 112-3.

The first connection portion 112-3 is arranged opposite to the first part 31. Since the first part 31 is thicker and stronger, a part of the bending stress can be borne by the first part 31, so that the stress at the first connection portion 112-3 is smaller, and it is not easy for cracks or even breakages to occur at the first connection portion 112-3.

The bottom wall 113 is connected to the second transition surface 114 to form a second connection portion 113-4, and the second connection portion 113-4 may include a part of the bottom wall 113 close to the second transition surface 114 and a part of the second transition surface 114 close to the bottom wall 113. After the flexible cover 10 is bent, the stress at the second connection portion 113-4 is relatively concentrated, and the thickness at the second connection portion 113-4 is relatively small, and thus cracks or even breakages are easily generated at the second connection portion 113-4.

The second connection portion 113-4 is arranged opposite to the third part 33. Since the third part 33 is relatively thick and has a relative large strength, a part of the bending stress can be borne by the third part 33, so that the stress at the second connection portion 113-4 is relatively small, and it is not easy for cracks or even breakages to occur at the second connection portion 113-4.

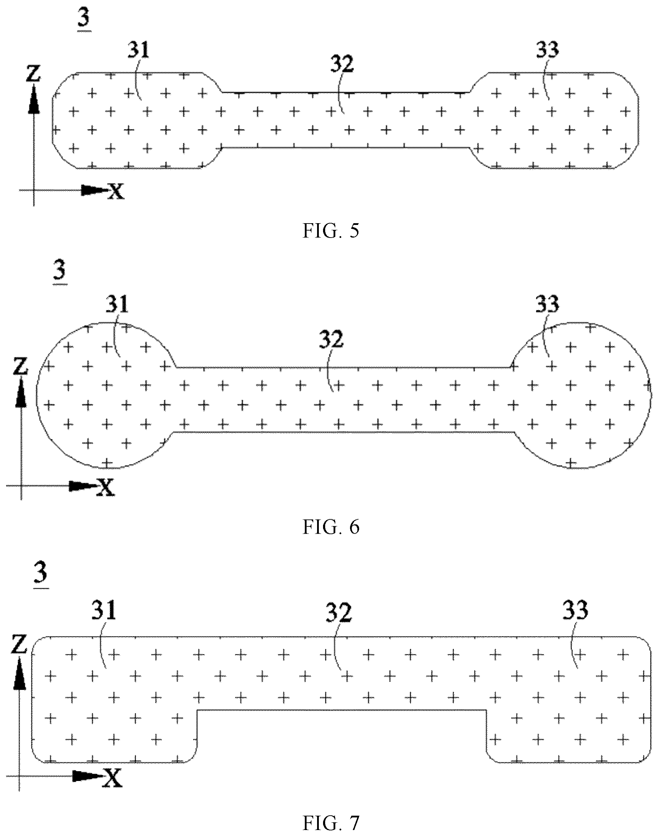

As shown in FIG. 5 to FIG. 7, the first part 31 and the third part 33 may be set as cylinders, cuboids, rounded cuboids, etc., and accordingly the shapes of the cross sections of the first part 31 and the third part 33 perpendicular to the second direction Y may be circles, rectangles, rounded rectangles, etc. The second part 32 is set as a cuboid film layer, and accordingly the shape of the cross section of the second part 32 perpendicular to the second direction Y may be a rectangle. Of course, the first part 31 and the third part 33 may also be other shape(s), which are not described here one by one.

In addition, in this case, groove(s) 34 may also be set in the reinforcing layer 3, and the ratio of the depth of the groove(s) 34 to the thickness of the reinforcing layer 3 may be the range(s) described above. The thickness of the reinforcing layer 3 refers to the thickness of the reinforcing layer 3 at the position where the groove 34 is set.

As shown in FIGs. 2, 3, 8, 14 and 15, in some example implementations of the present disclosure, the ultra-thin glass layer 1 of the unequal thickness has two surfaces arranged opposite to each other. The recess structure 11 may be arranged at only one of the surfaces. The flexible layer 2 and the reinforcing layer 3 are arranged in the recess structure 11.

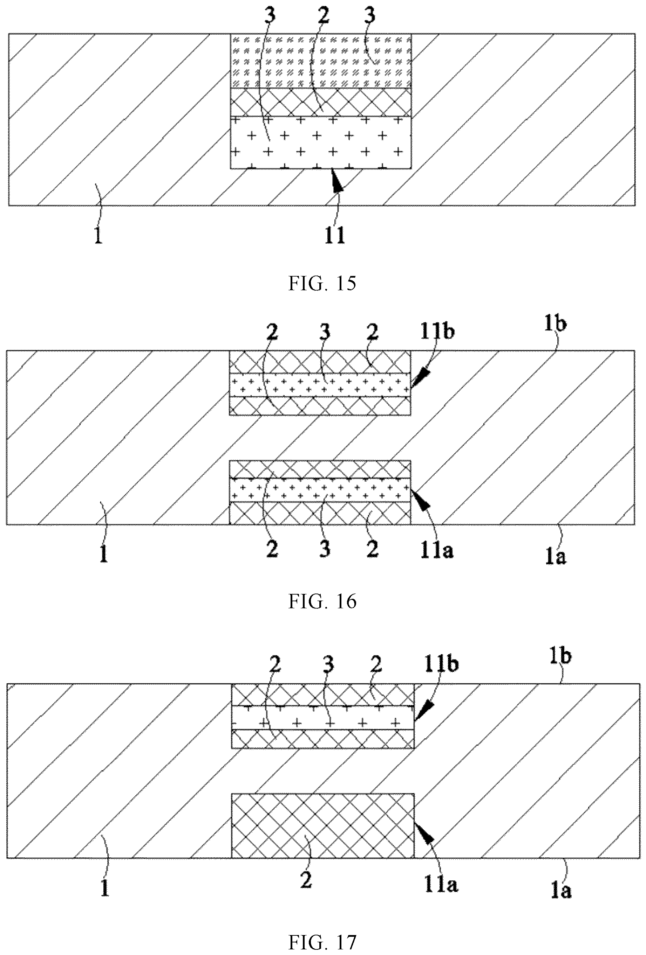

Referring to FIGs. 16 to 19, in some other example implementations of the present disclosure, a recess structure 11 may be provided at both surfaces. The recess structures 11 at the two surfaces may be arranged opposite to each other. For example, the recess structures 11 at the two surfaces may be arranged directly opposite to each other. Of course, directly opposite to each other does not only mean completely directly opposite to each other, but there may be a certain error. The error range varies depending on the process and the equipment. As long as the error is within the error range, the arrangement may be considered as an opposite arrangement.

As shown in FIG. 16, the recess structures 11 at both surfaces are provided with a flexible layer 2 and a reinforcing layer 3. The flexible layers 2 and the reinforcing layers 3 in the recess structures 11 at both surfaces may be symmetrical or asymmetrical.

As shown in FIGs. 17 to 19, two oppositely arranged surfaces of the ultra-thin glass layer 1 of the unequal thickness are a first surface 1a and a second surface 1b. A recess structure 11 arranged at the first surface 1a is a first recess structure 11a, and a recess structure 11 arranged at the second surface 1b is a second recess structure 11b. Only the flexible layer 2 is arranged in the first recess structure 11a, and the flexible layer 2 and the reinforcing layer 3 are arranged in the second recess structure 11b.

The specific structures of the flexible layer 2 and the reinforcing layer 3 have been described in detail above, and thus repeated descriptions will be omitted here.

The number of layers and a positional relationship of the flexible layer 2 and the reinforcing layer 3 in a recess structure are described below. It should be noted that in a case where the flexible layer 2 and the reinforcing layer 3 are provided in the recess structures 11 at both surfaces, the following example implementations can be combined arbitrarily.

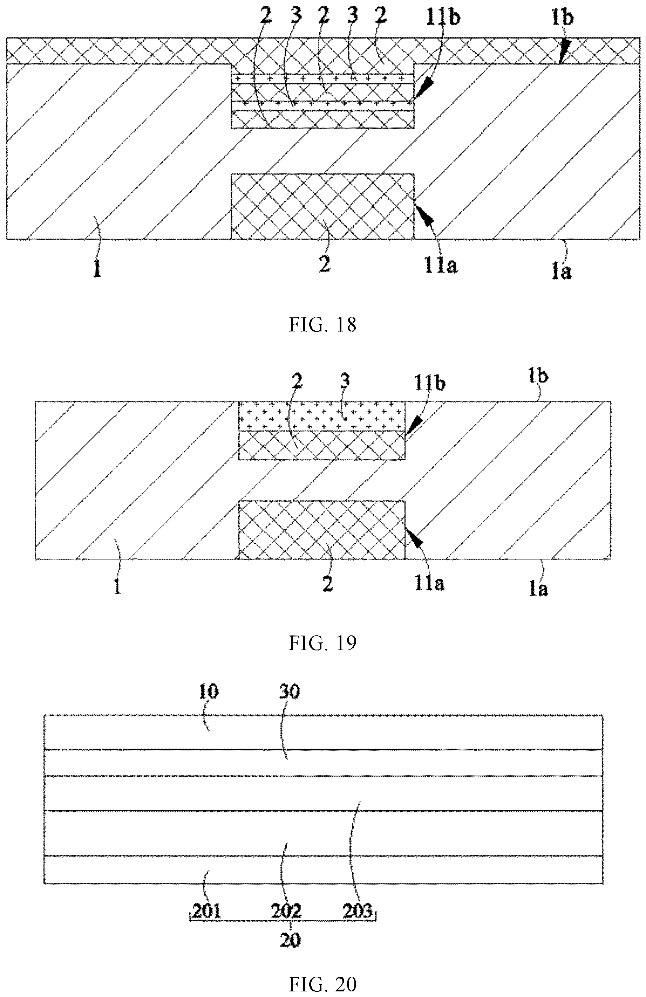

As shown in FIG. 19, in a recess structure 11, the flexible layer 2 is set as one layer, and the reinforcing layer 3 is set as one layer. The reinforcing layer 3 is located at a side of the flexible layer 2 away from the ultra-thin glass layer 1 of the unequal thickness, that is, the flexible layer 2 is located at the inner side, and the reinforcing layer 3 is located at the outer side. The reinforcing layer 3 can protect the flexible layer 2.

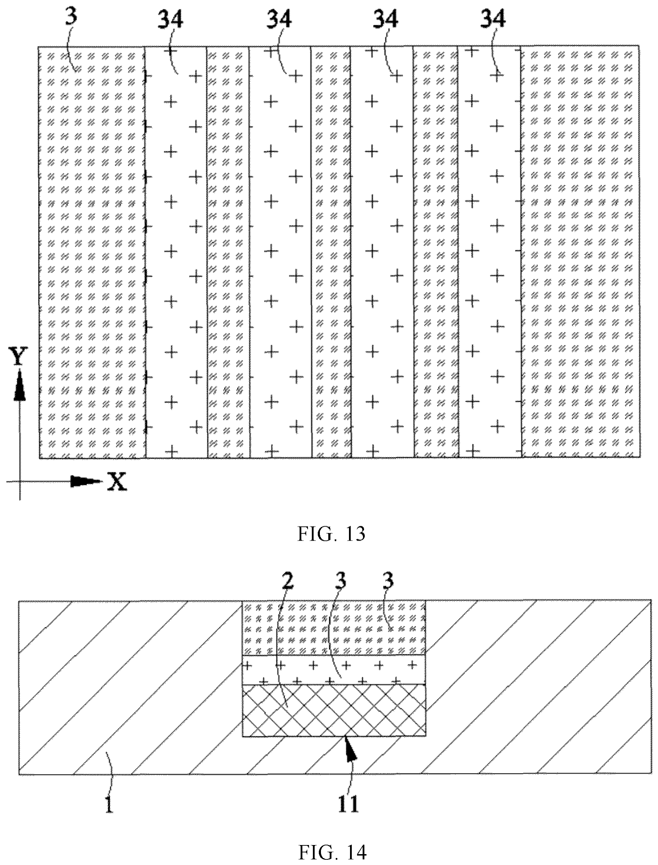

Referring to FIG. 14 and FIG. 15, in a recess structure 11, the reinforcing layer 3 is set as two layers, the flexible layer 2 is set as one layer, and at least one reinforcing layer 3 is located at a side of the flexible layer 2 away from the unequal thickness ultra-thin glass layer 1. For example, as shown in FIG. 15, the flexible layer 2 may be located between two reinforcing layers 3, so that one reinforcing layer 3 is located at a side of the flexible layer 2 away from the unequal thickness ultra-thin glass layer 1, and one reinforcing layer 3 is located at a side of the flexible layer 2 close to the unequal thickness ultra-thin glass layer 1. As shown in FIG. 14, it is also possible to provide two reinforcing layers 3 at the side of the flexible layer 2 away from the unequal thickness ultra-thin glass layer 1. The moduli of the two reinforcing layers 3 may be the same or different.

Referring to FIGs. 16 to 18, in a recess structure 11, the flexible layer 2 is set as at least two layers, the reinforcing layer 3 is set as at least one layer, and the reinforcing layer 3 and the flexible layer 2 are alternately arranged. For example, referring to FIGs. 16 and 17, in a recess structure 11, the flexible layer 2 is set as two layers, the reinforcing layer 3 is set as one layer, and the reinforcing layer 3 is between two flexible layers 2, so that the reinforcing layer 3 and the flexible layers 2 are arranged alternately. The moduli of the two flexible layers 2 may be the same or different. Referring to FIG. 18, in a recess structure 11, the flexible layer 2 is set as three layers, the reinforcing layer 3 is set as two layers, and each reinforcing layers 3 is between two flexible layers 2, so that the reinforcing layers 3 and the flexible layers 2 are arranged alternately.

In a recess structure 11, the sum of the thickness(es) of all the flexible layer(s) 2 and the thickness(es) of all the reinforcing layer(s) 3 may be smaller than or equal to the depth of the recess structure 11.

In other example implementations, the outermost flexible layer 2 extends outside the recess structure 11. For example, the outermost flexible layer 2 may protrude from the ultra-thin glass layer 1 of the unequal thickness. That is, in a recess structure 11, the sum of the thickness(es) of all the flexible layer(s) 2 and the thickness(es) of all the reinforcing layer(s) 3 may be greater than the depth of the recess structure 11. Referring to FIG. 18, it is also possible that the outermost flexible layer 2 covers the surface of the ultra-thin glass layer 1 of the unequal thickness in the non-bend region FZW. This arrangement can improve the connection strength between the recess structure 11 and the flexible layer(s) 2 and the reinforcing layer(s) 3 filled in the recess structure 11, and prevent the flexible layer(s) 2 and the reinforcing layer(s) 3 from escaping from the recess structure 11.

Of course, in some other example implementations of the present disclosure, it is also possible that the outermost reinforcing layer 3 extends outside the recess structure 11. For example, the outermost reinforcing layer 3 may protrude from the ultra-thin glass layer 1 of the unequal thickness. That is, in a recess structure 11, the sum of the thickness(es) of all the flexible layer(s) 2 and the thickness(es) of all the reinforcing layer(s) 3 may be greater than the depth of the recess structure 11. It is also possible that the outermost reinforcing layer 3 covers the surface of the ultra-thin glass layer 1 of the unequal thickness in the non-bend region FZW. The arrangement can also improve the connection strength between the recess structure 11 and the flexible layer(s) 2 and the reinforcing layer(s) 3 filled in the recess structure 11, and prevent the flexible layer(s) 2 and the reinforcing layer(s) 3 from escaping from the recess structure 11. Moreover, the impact resistance performance of the ultra-thin glass layer 1 of the unequal thickness in the non-bend region FZW can be improved.

Based on the same inventive concept, an example implementation of the present disclosure provides a flexible display panel. As shown in FIG. 20, the flexible display panel may include a display substrate 20 and a flexible cover 10. The flexible cover 10 is the flexible cover 10 according to any one of the implementations described above. The flexible cover 10 is arranged at the light exit side of the display substrate 20. The specific structure of the flexible cover 10 has been described in detail above, and thus repeated descriptions will be omitted here.

The display substrate 20 may be an Organic Electroluminescence Display (organic light-emitting semiconductor, OLED) display substrate, a Quantum Dot Light Emitting Diodes (QLED) display substrate, a Micro-light emitting diode (Micro-LED) display substrate, etc. The display substrate 20 has a light exit side and a non-light exit side, and the light exit side and the non-light exit side are arranged opposite to each other. Image(s) can be displayed on the light exit side, and the surface that displays the image(s) is a display surface.

The display substrate 20 may include a base substrate 201, a driving backplane 202 and a light emitting device 203. The driving backplane 202 may drive the light emitting device 203 to emit light. The driving backplane 202 is arranged at a side of the base substrate 201, and the light emitting device 203 is arranged at a side of the driving backplane 202 away from the base substrate 201. A touch substrate 30 may be arranged at the light exit side of the display substrate 20. That is, the touch substrate 30 is arranged at the side of the light emitting device 203 away from the base substrate 201. The flexible cover 10 may be arranged at a side of the touch substrate 30 away from the display substrate 20, so that the flexible cover 10 is arranged at the light exit side of the display substrate 20.

Based on the same inventive concept, an example implementation of the present disclosure provides a foldable display device. The foldable display device may include the flexible display panel described above.

The specific type of the foldable display device is not particularly limited. Any type of foldable display device commonly used in the art can be used, for example, a mobile device such as a mobile phone, a wearable device such as a watch, a VR device, etc. Those skilled in the art can make corresponding choices based on the specific purpose of the foldable display device, and repeated descriptions will be omitted here.

It should be noted that, in addition to the flexible display panel, the foldable display device also includes other necessary member(s) and component(s). Taking a display as an example, specifically, components such as a housing, a circuit board, a power line, etc. may be included. Those skilled in the art can make corresponding supplements according to the specific use requirements of the display device, and repeated descriptions will be omitted here.

Those skilled in the art will readily appreciate other implementations of the present disclosure after considering the description and practicing the invention disclosed herein. This application is intended to cover any modification, use or adaptation of the present disclosure, which follows the general principles of the present disclosure and includes common knowledge or customary techniques in the art that are not disclosed in the present disclosure. The description and examples are intended to be illustrative only, and the true scope and spirit of the present disclosure are indicated by the appended claims.

## Claims

1. A flexible cover having a bend region and a non-bend region arranged along a first direction, wherein the flexible cover comprises:
an ultra-thin glass layer of an unequal thickness, wherein a recess structure is provided in the ultra-thin glass layer of the unequal thickness, and at least a part of the recess structure is located in the bend region;
a flexible layer at least arranged in the recess structure; and
a reinforcing layer at least arranged in the recess structure, wherein a modulus of the reinforcing layer is greater than a modulus of the flexible layer, and the modulus of the reinforcing layer is smaller than a modulus of the ultra-thin glass layer of the unequal thickness.

2. The flexible cover according to claim 1, wherein the reinforcing layer is provided with a groove, the groove extends along a second direction, and the second direction is perpendicular to the first direction.

3. The flexible cover according to claim 2, wherein the groove is arranged at a side of the reinforcing layer close to a bottom wall of the recess structure, or the groove is arranged at a side of the reinforcing layer away from the bottom wall of the recess structure.

4. The flexible cover according to claim 3, wherein a depth of the groove is smaller than or equal to 50% of a thickness of the reinforcing layer.

5. The flexible cover according to claim 2, wherein a groove arranged at a side of the reinforcing layer close to a bottom wall of the recess structure is a first groove, and a groove arranged at a side of the reinforcing layer away from the bottom wall of the recess structure is a second groove, and the first groove and the second groove are staggered, or the first groove and the second groove are opposite to each other.

6. The flexible cover according to claim 5, wherein a sum of a depth of the first groove and a depth of the second groove is smaller than or equal to 50% of a thickness of the reinforcing layer.

7. The flexible cover according to any one of claims 1 to 6, wherein a ratio of an absolute value of a difference between a refractive index of the flexible layer and a refractive index of the ultra-thin glass layer of the unequal thickness to the refractive index of the ultra-thin glass layer of the unequal thickness is smaller than or equal to 0.5%, and a ratio of an absolute value of a difference between a refractive index of the reinforcing layer and the refractive index of the ultra-thin glass layer of the unequal thickness to the refractive index of the ultra-thin glass layer of the unequal thickness is smaller than or equal to 0.5%.

8. The flexible cover according to any one of claims 1 to 6, wherein a ratio of an absolute value of a difference between a refractive index of the flexible layer and a refractive index of the ultra-thin glass layer of the unequal thickness to the refractive index of the ultra-thin glass layer of the unequal thickness is smaller than or equal to 0.3%, and a ratio of an absolute value of a difference between a refractive index of the reinforcing layer and the refractive index of the ultra-thin glass layer of the unequal thickness to the refractive index of the ultra-thin glass layer of the unequal thickness is smaller than or equal to 0.3%.

9. The flexible cover according to any one of claims 1 to 6, wherein the modulus of the reinforcing layer is greater than or equal to 0.1 GPa and smaller than or equal to 6 GPa, and the modulus of the flexible layer is greater than or equal to 0.01 GPa and smaller than or equal to 1 GPa.

10. The flexible cover according to any one of claims 1 to 6, wherein a ratio of a total thickness of the reinforcing layer to a depth of the recess structure is greater than or equal to 0.2 and smaller than or equal to 0.7.

11. The flexible cover according to any one of claims 1 to 6, wherein a ratio of a total thickness of the reinforcing layer to a depth of the recess structure is greater than or equal to 0.3 and smaller than or equal to 0.5.

12. The flexible cover according to any one of claims 1 to 6, wherein:
in the second direction, a ratio of a length of the reinforcing layer to a length of the recess structure is greater than or equal to 0.75 and smaller than or equal to 1,
in the first direction, a ratio of a width of the reinforcing layer to a width of the recess structure is greater than or equal to 0.75 and smaller than or equal to 1, and
the first direction intersects the second direction.

13. The flexible cover according to any one of claims 1 to 6, wherein the reinforcing layer comprises a first part, a second part and a third part sequentially connected along the first direction, a thickness of the first part is greater than a thickness of the second part, and a thickness of the third part is greater than the thickness of the second part.

14. The flexible cover according to claim 13, wherein in the first direction, a width of the first part is smaller than or equal to 50% of a width of the second part, and a width of the third part is smaller than or equal to 50% of the width of the second part.

15. The flexible cover according to claim 13, wherein:
the recess structure comprises a first side wall, a first transition surface, a bottom wall, a second transition surface and a second side wall connected sequentially;
the bottom wall is connected with the first transition surface to form a first connection portion, and the first connection portion is arranged opposite to the first part; and
the bottom wall is connected with the second transition surface to form a second connection portion, and the second connection portion is arranged opposite to the third part.

16. The flexible cover according to any one of claim 1, wherein:
the ultra-thin glass layer of the unequal thickness has two surfaces arranged opposite to each other; and
the two surfaces are both provided with the recess structure, and recess structures in the two surfaces are arranged opposite to each other, or
the recess structure is only provided in one of the surfaces.

17. The flexible cover according to claim 16, wherein the flexible layer and the reinforcing layer are arranged in the recess structures in the two surfaces; or
wherein the two surfaces of the ultra-thin glass layer of the unequal thickness arranged opposite to each other are a first surface and a second surface, a recess structure arranged in the first surface is a first recess structure, and a recess structure arranged in the second surface is a second recess structure, only the flexible layer is arranged in the first recess structure, and the flexible layer and the reinforcing layer are arranged in the second recess structure.

18. The flexible cover according to claim 16 or 17, wherein, in one of the recess structures, the flexible layer is provided as at least two layers, the reinforcing layer is provided as at least one layer, and the reinforcing layer and the flexible layer are alternately provided.

19. The flexible cover according to claim 18, wherein an outermost flexible layer extends outside the recess structure.

20. The flexible cover according to claim 16 or 17, wherein in one of the recess structures, the reinforcing layer is provided as two layers, the flexible layer is provided as one layer, and at least one reinforcing layer is located at a side of the flexible layer away from the ultra-thin glass layer of the unequal thickness.

21. The flexible cover according to claim 16 or 17, wherein in one of the recess structures, the flexible layer is provided as one layer, the reinforcing layer is provided as one layer, and the reinforcing layer is located at a side of the flexible layer away from the ultra-thin glass layer of the unequal thickness.

22. A flexible display panel, comprising:
a display substrate; and
a flexible cover which is the flexible cover according to any one of claims 1 to 21, wherein the flexible cover is arranged at a light exit side of the display substrate.

23. A foldable display device, comprising the flexible display panel according to claim 22.
